Europäisches Patentamt

European Patent Office

Office européen des brevets

(11) Numéro de publication: **0 457 065 A2**

## DEMANDE DE BREVET EUROPEEN

(21) Numéro de dépôt: 91106555.5

(22) Date de dépôt: 24.04.91

(51) Int. Cl.⁵: **G01B 3/46**

(30) Priorité: 18.05.90 CH 1692/90

(43) Date de publication de la demande:
21.11.91 Bulletin 91/47

(84) Etats contractants désignés:
**DE GB**

(71) Demandeur: **TESA S.A.**
**Rue Bugnon 38**
**CH-1020 Renens(CH)**

(72) Inventeur: **Ginggen, Serge**
**Route de la Maladière 10**
**CH-1022 Chavannes(CH)**
Inventeur: **Frauenknecht, Jean-Marc**
**Rue de l'Industrie 13**
**CH-1030 Bussigny-près-Lausanne(CH)**

(74) Mandataire: **Misrachi, Alfred**
**15, Ch. de la Plantaz**
**CH-1024 Ecublens(CH)**

(54) Dispositif antichoc pour un appareil de mesure.

(57) Le dispositif, montré associé à un appareil de mesure d'alésages, comporte deux éléments en prise en forme d'une vis (20) et d'un écrou (21) à rotation et déplacement axial relatifs réversibles. La vis (20) est un manchon cylindrique fileté monté coaxial à la tige de mesure (4) de l'appareil et à rotation libre entre deux butées (9, 23) de celle-ci, et l'écrou (21) est constitué par un filetage intérieur du corps cylindrique (1) de l'appareil. La force de frottement développée par la rotation relative vis-écrou est prévue pour céder au moins à la pression du ressort de rappel (7) de la tige de mesure et pour constituer un frein de modulation de la vitesse des déplacements dans les deux sens de la tige de mesure (4) dans le corps de l'appareil.

_FIG.-1_

La présente invention a pour objet un dispositif antichoc, pour un appareil de mesure, tel qu'un comparateur, un calibre, une jauge, une colonne ou un trusquin, du genre comprenant un corps, une tige de mesure mobile dans le corps et au moins une touche de mesure reliée à la tige de mesure et destinée à contacter un élément d'une pièce à mesurer sous la pression d'un ressort de rappel.

La plupart des appareils de mesure du genre précité sont équipés d'un dispositif antichoc destiné à préserver les organes mécaniques fragiles de leur chaîne de mesure contre des chocs provoqués par des chutes ou des erreurs de manipulation entraînant, par exemple, une arrivée brutale de la tige de mesure à fin de course, des violents déplacements par à-coups ou bien une application à vitesse trop élevée de la ou des touches de mesure contre la surface d'une pièce à mesurer.

Les dispositifs antichocs connus sont de types qui diffèrent dans leurs conceptions mais qui présentent cependant le caractère commun d'utiliser un équipage amortisseur, pour la plupart à ressort, interposé entre deux parties d'un organe mécanique de la chaîne de mesure, de manière à permettre leur désolidarisation temporaire et élastique sous l'effet d'un choc qui pourrait entraîner, sans cela, la rupture d'un organe fragile tel que par exemple un engrenage du mécanisme multiplicateur de transmission d'un comparateur à cadran.

Dans certains appareils de mesure d'alésages équipés d'une tête de mesure à touches radiales et d'une tige de mesure directement reliée à un transducteur électronique, les touches radiales sont rétractées à un diamètre minimal à l'aide d'une gâchette pour permettre leur insertion dans un alésage à mesurer, et à l'encontre d'un ressort de rappel fournissant la pression de mesure. Après introduction de la tête de mesure dans l'alésage, le relâchement de la gâchette libère les touches radiales qui, sous l'action du ressort de rappel, s'écartent jusqu'à prendre appui contre la paroi de l'alésage, après quoi la mesure est prise. Lors du relâchement de la gâchette de ces appareils, les touches de mesure soumises à l'action du ressort de rappel peuvent entrer en contact plus ou moins brutal avec la paroi de l'alésage, selon la rapidité du relâchement effectué par l'opérateur. Ce contact brutal peut être dommageable aussi bien pour le système mécanique de déplacement radial des touches de mesure que pour la paroi de l'alésage à mesurer, en particulier lorsque cette paroi est de dureté nettement moins grande que celle des touches de mesure. Il y a donc pour ce type d'appareil de mesure d'alésage un problème particulier à résoudre.

Dans les équipages amortisseurs à ressorts connus, utilisés essentiellement dans les appareils dont la chaîne de mesure est purement mécanique, les ressorts sont de types divers selon la grandeur de la course d'amortissement prévue et selon qu'il s'agit d'un amortissement dans un seul ou dans les deux sens des déplacements de la tige de mesure.

C'est ainsi que sont utilisés tantôt un ressort spiral à longue course dans un seul sens de déplacement, comme dans le comparateur décrit dans le brevet DE 1253465, tantôt une paire de ressorts à lames à faible course dans les deux sens de déplacement, comme dans le comparateur décrit dans le brevet US 3835544.

Ces systèmes amortisseurs à ressorts, outre leur complexité plus ou moins grande selon le type, présentent tous l'inconvénient majeur de nécessiter la rupture temporaire, en cas de choc brutal, de la continuité de la chaîne de mesure, du fait qu'ils fonctionnent par désolidarisation de deux éléments de cette chaîne, cette rupture ayant pour effet de soulever des problèmes de répétivité ou de retour précis au zéro de mesure.

En effet, par les chocs répétés entre les butées des deux éléments successivement désolidarisés par les chocs puis remis en appui plus ou moins brutal par le ressort de l'équipage amortisseur, des usures ou des déformations difficilement décelables sur le tas peuvent se produire, ou bien encore des particules de matière peuvent s'interposer entre les butées comme par exemple des poussières ou des oxydes dûs à la corrosion.

Par ailleurs ces systèmes amortisseurs à ressorts n'ont pas une fonction linéaire et la course d'amortissement qu'ils permettent reste tout de même assez réduite dans le meilleur des cas par rapport à la course capable de la tige de mesure.

En ce qui concerne cet inconvénient de la limitation de la course d'amortissement, on connaît cependant un appareil de mesure, décrit dans le brevet US 4010548, qui n'en est pas affecté. Dans cet appareil en effet l'équipage amortisseur et constitué non plus par un système élastique à ressort mais par un système d'accouplement par friction intercalé entre deux pignons dentés coaxiaux, la force de friction étant prévue pour résister à l'action du ressort de rappel fournissant la pression de mesure et pour céder à des chocs risquant d'entraîner la rupture d'un ou de plusieurs éléments fragiles de la chaîne de mesure. De ce fait, la course d'amortissement n'est ici limitée que par la propre course de la tige de mesure de l'instrument. Cependant, l'inconvénient majeur relatif à la rupture temporaire de la chaîne de mesure subsiste sur cet appareil et la répétivité et le zéro de mesure sont encore moins fiables du fait de l'absence de bornes ou de butées d'appui entre organes de friction.

L'invention prétend à résoudre les problèmes soulevés par les dispositifs antichocs connus précités ainsi que ceux soulevés par les appareils de mesure à transducteurs électroniques du type mentionné précédemment.

A cet effet, le dispositif antichoc selon l'invention est caractérisé en ce qu'il est composé de deux éléments en prise, en forme d'une vis et d'un écrou à rotation et déplacement axial relatifs réversibles, dont l'un est lié au corps de l'instrument et est fixe au moins axialement par rapport à celui-ci, et dont l'autre est lié à la tige de mesure de l'instrument pour être déplacé et entraîné axialement par celle-ci, un seul de ces deux éléments étant mobile en rotation par rapport à l'organe auquel il est lié et la force de frottement développée par la rotation relative de ces deux éléments en prise, lors du déplacement de la tige de mesure dans le corps, étant déterminée pour céder au moins à la pession du ressort de rappel de l'appareil de mesure.

De la sorte, l'effet antichoc est ici obtenu par un freinage modulé des déplacements de la tige de mesure ayant pour effet de limiter leur vitesse à une valeur susceptible de ne pas entraîner de dommages aussi bien dans le sens opposé à l'action du ressort de rappel que dans le sens de cette action, et ceci sans nécessiter de rupture de la chaîne de mesure du fait que les deux éléments, vis et écrou, sont associés l'un au corps et l'autre à la tige de mesure de l'instrument, et non pas intercalés entre deux parties ou deux éléments de la chaîne de mesure.

Autrement dit, le dispositif antichoc ainsi conçu se trouve hors circuit de la chaîne de mesure de l'instrument et n'a de ce fait aucune influence sur lui, en particulier sur la répétivité et la constance du zéro de mesure.

Par ailleurs, l'étendue de la course d'amortissement n'est limitée pratiquement que par la course capable, entre butées, de la tige de mesure de l'instrument, du fait de la conception même du dispositif.

Ce dispositif est de réalisation simple et peu coûteuse, du fait qu'étant hors circuit de la chaîne de mesure, il ne nécessite pas un degré de précision élevé dans sa réalisation.

La modulation de l'effet de freinage obtenu par le frottement relatif des deux éléments en prise est aisée, car les paramètres qui le déterminent sont faciles à maîtriser et ne se modifient pratiquement pas dans le temps, car le système ne subit qu'une fatigue mineure, par frottement sur des surfaces relativement grandes par rapport aux pressions subies.

L'un ou l'autre des deux éléments, vis ou écrou du dispositif, peut être lié au corps ou à la tige de mesure de l'instrument, ce qui confère à ce dispositif des qualités versatiles facilitant ses applications à pratiquement tous les types d'instruments de mesure comportant une tige de mesure mobile dans leur corps.

Le dessin annexé représente, à titre d'exemples, trois formes d'exécution de l'objet de l'invention.

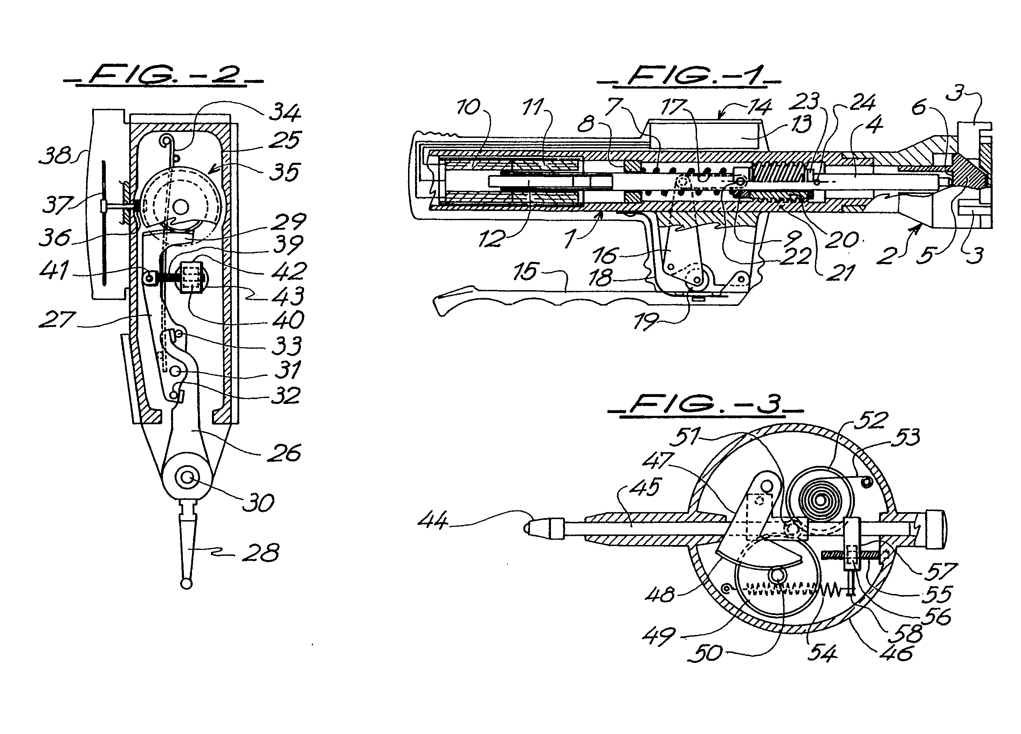

Les figures 1, 2 et 3 de ce dessin représentent respectivement et schématiquement la première, la seconde et la troisième forme d'exécution de cet objet montré associé à tois appareils de mesure de types différents.

Le dispositif antichoc représenté figure 1 dans sa première forme d'exécution est montré associé à un appareil de mesure d'alésages comprenant :

- un corps 1 à tête de mesure 2 comportant trois touches radiales 3 à 120° dont seules deux sont visibles,
- une tige de mesure 4 montée mobile axialement dans le corps 1,
- un mécanisme de déplacement radial des touches 3 par le moyen d'une butée mobile tronconique 5 sur la surface conique de laquelle est mise en appui la base oblique de chacune des touches 3 par un moyen ressort, non représenté, et contre le fond 6 de laquelle la tige de mesure 4 est mise en appui par une de ses deux extrémités,
- un ressort de rappel 7 comprimé entre une face d'appui d'un palier 8 solidaire du corps 1 et une bague d'entraînement axial 9 de la tige de mesure 4, solidaire de celle-ci, et ayant pour effet, par poussée de cette tige contre la butée tronconique 5, d'écarter les touches radiales 3 au diamètre maximal capable de la tête de mesure 2, ce ressort 7 étant prévu pour fournir la pression de mesure désirée desdites touches contre la paroi des alésages à mesurer,
- un transducteur électronique de mesure qui est ici, pour exemple, de type inductif comprenant deux bobines 10 et 11 solidaires du corps 1 et un noyau de ferrite 12 fixé en bout de la tige de mesure 4 à l'opposé des touches 3, et dans lequel le noyau de ferrite 12 influence l'impédance des bobines 10 et 11 par ses déplacements axiaux pour produire un signal électrique représentatif du diamètre mesuré, ce transducteur étant ici relié à un circuit de traitement 13 présentant un affichage numérique 14 de la grandeur du diamètre mesuré,
- un dispositif de rétraction des touches de mesure radiales 3 pour les rétracter au diamètre minimal capable de la tête de mesure 2, agissant à l'encontre du ressort de rappel 7 et comprenant une gâchette de commande 15 reliée à la tige de mesure 4 par l'intermédiaire de deux leviers latéraux 16 articulés au corps 1 et de deux bielles latérales 17, représentées en traits interrompus, elles-mêmes articulées d'une part à ces leviers 16 et d'autre part aux deux extrémités d'une goupille 22 traversant la tige de mesure et sa bague d'entraînement 9. Dans ce dernier agencement, la goupille 22 passe au travers de deux ouvertures latérales du corps 1, non visibles, pour être articulée aux deux bielles 17, de chaque côté du corps 1, et la gâchette 15, maintenue en position neutre par une lame de ressort 18 fixée au corps 1, est disposée pour pouvoir actionner les leviers 16 par appui sur un galet 19 monté rotatif en bout de ces leviers.

Le dispositif antichoc selon l'invention, qui équipe cet appareil de mesure d'alésage, se compose de deux éléments 20 et 21 en forme d'une vis et d'un écrou à rotation et à déplacement axial réversibles.

L'un de ces deux éléments, ici en forme d'écrou 21, est constitué par un filetage intérieur d'un tronçon de la paroi tubulaire du corps 1. A noter ici que cet élément pourrait être constitué par une pièce rapportée dans le corps 1.

L'autre élément, en forme de vis, est constitué par un manchon cylindrique fileté 20 dont la paroi extérieure filetée est en prise, en position de fin de course de la tige de mesure 4, sur toute la longeur du tronçon intérieur fileté du corps 1, et dont la paroi lisse intérieure est montée à rotation libre autour de la tige de mesure 4. Cet élément en forme de vis 20 est ici immobilisé axialement, sur la tige de mesure 4, entre la bague 9 et une rondelle de retenue 23 maintenue en place par une goupille 24, dans une position située entre le ressort de rappel 7 et la tête de mesure 2.

A la manipulation de la gâchette 15 précédant une prise de mesure par l'opérateur, la tige de mesure 4 est déplacée axialement à l'encontre du ressort de rappel 7 par la cinématique des leviers 16 et bielles 17 et ici de droite à gauche sur le dessin, ce qui a pour effet, d'une part d'entraîner axialement l'élément en forme de vis 20 qui se met à tourner par vissage dans le tronçon en forme d'écrou 21 du corps 1, du fait de ses qualités de réversibilité, et d'autre part de laisser se rétracter les touches radiales 3 par refoulement de la butée tronconique 5 contre la tige de mesure 4, jusqu'à fin de course de recul de celle-ci, qui correspond à la rétraction maximale desdites touches dans la tête de mesure 2.

Après introduction de la tête de mesure dans l'alésage à mesurer par l'opérateur, le relâchement de la gâchette 15 libère la retenue du ressort de rappel 7 et celui-ci repousse la tige de mesure 4 vers la tête de mesure 2, ce qui a pour effet d'écarter les touches de mesure 3 par poussée de la butée tronconique 5, et d'entraîner dans l'autre sens que précédemment, axialement et rotativement, l'élément en forme de vis 20, et ceci jusqu'à la rencontre de la paroi de l'alésage à mesurer par les touches de mesure 3, après quoi la prise de mesure est effectuée.

Comme déjà énoncé, la force de frottement développée par la rotation relative des deux éléments en prise, vis 20 et écrou 21, constitue un frein permettant de moduler la vitesse des déplacements axiaux de la tige de mesure 4 dans le corps 1 de l'instrument, afin d'éviter certaines détériorations résultant de chocs ou de manipulations brutales.

La grandeur de cette force de frottement est déterminée pour céder au moins à la pression développée par le ressort de rappel 7 pour assurer par ce dernier le rappel des touches de mesure 3 à leur position de déploiement maximal.

A partir du respect de la condition de réversibilité du système vis-écrou, qui est défini mathématiquement par le rapport entre l'angle d'hélice et l'angle de frottement du filet du filetage des deux éléments en prise, qui doit être supérieur à l'unité, la modulation de la force de freinage à la valeur désirée est obtenue par intégration de paramètres simples à manipuler tels que le nombre de filets du filetage, leur section, le diamètre moyen du filetage, la longeur en prise, les matériaux utilisés et éventuellement la présence ou l'absence d'un graissage.

Les formes de la vis et de l'écrou montrés sur le dessin ne sont évidemment pas limitatives et toutes sortes de combinaisons sont possibles, étant donné le nombre important de paramètres sur lesquels on peut agir pour obtenir la modulation recherchée.

Il est possible également de différencier la vitesse de déplacement dans un sens par rapport à l'autre, par exemple en donnant à la section droite des filets du filetage des flancs d'inclinaisons différentes d'un côté par rapport à l'autre.

L'invention est donnée applicable à pratiquement tous les appareils de mesure comportant une tige de mesure mobile dans leur corps.

Les seconde et troisième formes d'exécution qui suivent illustrent cette possibilité.

Dans la seconde forme d'exécution représentée figure 2, le dispositif antichoc est montré associé à un comparateur à touche pivotante.

Dans le corps 25 de cet appareil, la tige de mesure se compose de deux leviers associés 26 et 27 dont l'un, inférieur 26, porte une touche de mesure 28 et dont l'autre, supérieur 27, porte un secteur denté 29. ces deux leviers 26 et 27 sont maintenus en appuis respectifs par un système de bascule à articulations 30, 31 et à butées et contrebutées espacées 32 et 33 ayant pour effet, sous la pression d'un ressort de rappel 34 et de manière connue, de faire déplacer toujours dans le même sens le levier supérieur 27 par rapport à la position de repos représentée sur le dessin, quel que soit le sens des pivotements de la touche de mesure 28.

Le secteur denté 29 du levier 27 attaque un système d'engrenages amplificateur de déplacements 35 dont le pignon de sortie 36 entraîne l'aiguille 37 d'un cadran indicateur 38.

Le dispositif antichoc de ce comparateur à touche pivotante 28 comprend une vis 39 liée au levier supérieur 27 de la tige de mesure et un écrou 40 lié au corps 25 de l'appareil, ces deux éléments étant à rotation et déplacement axial relatifs réversibles.

La vis 39, dont l'axe longitudinal est inscrit dans un plan parallèle au plan de pivotement du levier 27, est articulée par un bout sur un pivot 41 solidaire de ce levier et engagée par l'autre bout dans l'écrou 40, dans la position de repos représentée.

De son côté, l'écrou 40 est monté rotatif dans un paliercage 42 portant un pivot, non visible, perpendiculaire au plan de pivotement du levier 27 et qui est monté rotatif dans un palier 43 solidaire du corps 25.

Ainsi, dans cette deuxième forme d'exécution du dispositif antichoc, la vis 39 liée au levier 27 de la tige de mesure est fixe en rotation et mobile axialement, et l'écrou 40 est mobile en rotation et fixe axialement.

C'est ici les pivotements de la touche de mesure 28 et les deux leviers 26 et 27 de la tige de mesure qui sont freinés par le dispositif antichoc. La force de frottement développée doit ici également être déterminée pour céder au moins à la pression du ressort de rappel 34 pour permettre le retour du système en position de repos. Par ailleurs, cette force de frottement est ici une constante du fait que la totalité du filetage de l'écrou 40 est toujours engagée par la vis le long de la course de pivotement du levier 27 de la tige de mesure.

Dans la troisième forme d'exécution représentée figure 3, le dispositif antichoc est montré associé à un comparateur à cadran comportant une touche de mesure 44 montée en bout d'une tige de mesure 45 mobile axialement dans le corps 46 de cet instrument.

Les déplacements axiaux de la tige de mesure 45 sont transmis, par l'intermédiaire d'un levier 47 à secteur denté 48, à un train d'engrenage multiplicateur de déplacements 49-50-51 dont le pignon de sortie 51 entraîne l'aiguille du cadran indicateur, non visible. Une roue dentée supplémentaire 52 de rattrapage de jeu engrène le pignon de sortie 51 sous la tension d'un ressort spiral 53 monté sur son axe, à l'encontre d'un ressort de rappel 54 de la tige de mesure 45, la position relative des organes étant ici représentée à sensiblement mi-course de cette tige.

Le dispositif antichoc de ce comparateur comprend une vis 55 liée au corps 46, dans une position parallèle à la tige de mesure 45, et un écrou 56 lié à la tige de mesure, ces deux éléments étant en prise. La vis 55, fixe rotativement et axialement, est fixée rigidement par un bout dans la paroi du corps 46 alors que l'écrou 56 est monté mobile en rotation dans un palier-cage 57 fixé à la tige de mesure 45, le ressort de rappel 54 étant ici accroché à un tige 58 fixée à ce palier.

Partant des trois formes d'exécution décrites, qui ne sont cependant pas limitatives, il apparaît évident que toutes combinaisons entre elles peuvent être mises à profit pour des adaptations aisées à pratiquement tous les types d'appareils de mesure du genre comportant une tige de mesure montée mobile dans leur corps. Et ceci quel que soit le genre de cette mobilité, par translation ou rotation, et quelle que soit la longueur de sa course, car le dispositif présente la même efficacité sur petites et grandes longueurs de prise entre vis et écrou.

Le rapport des longueurs entre la vis et l'écrou peut également varier à volonté, selon la place disponible, la course de mesure et la modulation recherchée.

## Revendications

1. Dispositif antichoc, pour un appareil de mesure comprenant un corps, une tige de mesure mobile dans le corps et au moins une touche de mesure reliée à la tige de mesure et destinée à contacter un élément d'une pièce à mesurer sous la pression d'un ressort de rappel, caractérisé en ce qu'il est composé de deux éléments en prise, en forme d'une vis et d'un écrou à rotation et déplacement axial relatifs réversibles, dont l'un (21, 40, 55) est lié au corps (1, 25, 46) de l'instrument et est fixe au moins axialement par rapport à celui-ci, et dont l'autre (20, 39, 56) est liée à la tige de mesure (4, 27, 45) de l'instrument pour être déplacé et entraîné axialement par celle-ci, un seul de ces deux éléments étant mobile en rotation par rapport à l'organe auquel il est lié et la force de frottement développée par la rotation relative de ces deux éléments en prise, lors du déplacement de la tige de mesure dans le corps, étant déterminée pour céder au moins à la pression du ressort de rappel (7, 34, 54) de l'appareil de mesure.

2. Dispositif selon la revendication 1, caractérisé en ce que l'élément en forme de vis (20, 39) est lié à la tige de mesure.

3. Dispositif selon la revendication 1, caractérisé en ce que l'élément en forme de vis (55) est lié au corps.

4. Dispositif selon la revendication 2, pour un appareil à tige de mesure (4, fig. 1) mobile axialement, caractérisé en ce que l'élément en forme de vis est un manchon fileté (20) coaxial à la tige de mesure (4) et monté à rotation libre entre deux butées (9, 23) de celle-ci, et en ce que l'élément en forme d'écrou (21) est constitué par un filetage intérieur du corps (1) de l'appareil de mesure.

5. Dispositif selon la revendication 2, pour un appareil à tige de mesure pivotante (26-27, fig. 2), caractérisé en ce que l'élément en forme de vis (39) est inscrit dans un plan parallèle au plan de pivotement de la tige de mesure et articulé par un bout sur un pivot (41) solidaire de celle-ci, et en ce que l'élément en forme d'écrou (40) est monté à rotation libre dans un paliercage (42) portant un pivot perpendiculaire au plan de pivotement de la tige de mesure et monté rotatif dans un palier (43) solidaire du corps (25) de l'appareil.

6. Dispositif selon la revendication 3, pour un appareil à tige de mesure (45, fig. 3) mobile axialement, caractérisé en ce que l'élément en forme de vis (55) est fixé rigidement par un bout au corps (46) de l'instrument en position parallèle à la tige de mesure, et en ce que l'élément en forme d'écrou (56) est monté à rotation libre dans un palier-cage (57) fixé à ladite tige de mesure.

_FIG_-1_

_FIG_-2_

_FIG_-3_